# EUROPEAN PATENT APPLICATION

(11) **EP 1 834 722 A1**
(43) Date of publication of application: **19.09.2007**
(21) Application number: 06111198.5
(22) Date of filing: 15.03.2006
(51) Int. Cl.: B23D 49/16

(54) **RECIPROCATING SAW, TIMING FORK AND GEARBOX FOR USE THEREWITH**

(71) Applicant: Black & Decker, Inc., Newark, DE 19711 (US)
(72) Inventor: BONE, Graham, Durham, Berkshire DH1 1LY (GB)
(74) Representative: Clark, Charles Robert

(57) **Abstract**

A jigsaw gearbox (10) is described as having a counter-mass (22) and timing fork (20). The counter-mass (22) is used to reduce vibration of the jigsaw during operation and the timing fork (20) imparts an orbital or pendulum action on the blade. The counter-mass (22) is arranged with a groove (38) on a surface (S) into which the timing fork (20) is locatable. The groove (38) acts to guide the timing fork (20), thereby obviating the need for separate timing fork bearings.

## Description

### Technical Field

The present invention relates to a reciprocating saw, such as a jigsaw or the like, which comprises a gearbox and timing fork.

The present invention is described herein with reference to jigsaw-type reciprocating saws. However, it is understood that the invention is not limited to jigsaws and can equally be used on other reciprocating saws, such as sabre saws.

### Background Art

Jigsaws are well known in the art. Jigsaws which impart an orbital or pendulum movement on a saw blade during use are also known in the art. Such movement of the blade can increase the speed and efficiency with which a saw cuts through lumber.

Orbital motion of the blade causes the blade to move, during use, with a reciprocating motion and, at the same time, with an oscillating movement. The oscillating movement is timed such that the blade is in a forward movement component of the oscillation during the cutting stroke of the reciprocation motion (which corresponds to the saw blade teeth cutting into a work piece). Furthermore, the oscillating movement is timed such that the blade is in a rearwards movement component of the oscillation during the non-cutting stroke of the reciprocation motion (which corresponds to the saw blade teeth being disengaged with the work piece).

A timing fork can be used to impart the orbital motion. Movement of the timing fork is typically coupled to the saw blade through a bell crank mechanism. Alternatively, an orbital motion can be achieved by oscillating the crank shaft with a backward and forward movement, as well as a reciprocating up/down movement.

Such timing fork arrangements to achieve orbital blade motion are shown and/or described in US 4512078 , EP 716897 , EP 1060821 and PCT/WO 200232607 to name a few. The timing mechanism for the orbital movement of the blade are typically run from a cam surface disposed on a gearbox component, such as a gear cog or shaft. Other arrangements are known where the timing mechanism is pivotally mounted in the gearbox. Such an arrangement is described in US 5205043 5205043.

A counterbalance mass is typically employed to reduce operational vibrations felt by an operator. The counterbalance can be arranged to oscillated 180 degrees out of phase with the reciprocating shaft.

### Disclosure of Invention

It is an aim of the present invention to provide an improved jigsaw having a relatively robust timing mechanism for the provision of orbital movement of the blade, during use. Furthermore, the present invention aims to provide a relatively compact gearbox.

More specifically, the present invention provides an electrically powered hand operated reciprocating saw, comprising a housing in which is disposed an electric motor having an output shaft, a gearbox having an input coupled to the motor's output shaft, the gearbox being arranged to convert rotary motion of the motor's output into a reciprocating motion of a gearbox output, and a reciprocation shaft coupled to the gearbox output, the reciprocation shaft having a clamp disposed at one end for clamping a cutting blade thereto; said gearbox further comprising, a counterbalance and a timing fork both arranged to move out of phase with the reciprocation shaft, wherein, during use, an orbital motion of a blade disposed in the clamp is achievable by coupling movement of the timing fork to either the blade or reciprocation shaft; characterised in that the counterbalance comprises a guide for guiding the motion of the timing fork during use.

Advantageously, amongst other things, providing a guide for the timing fork on the counterbalance can reduce the complexity of manufacturing the gearbox; the gearbox and timing mechanism can be pre-made and disposed in the jigsaw as a single unit during manufacture.

Preferably, the guide is a channel with side walls, said channel being disposed on one surface of the counterbalance. The timing fork can comprise opposing edges, two of which are arranged to cooperate with a respective side wall of the channel. Thus, a simple guide means is provided for the timing fork without any separate bearing components being necessary. Preferably, the channel is linear. Thus, the movement of the timing fork is guided in a linear manner thereby eliminating side motion of the timing fork which can reduce wear on the portion of the timing fork in engagement with a bell crank mechanism.

Preferably, the timing fork is disposed within the channel. Thus, a relatively compact gearbox can be achieved. Preferably, the timing fork is arranged to be flush with the surface of the counterbalance on which the channel is disposed and in which the timing fork is disposed, thereby making the gearbox relatively compact.

Preferably, the counterbalance and timing fork move in phase with each other during use. As a result, wear of the cooperating portions of the timing fork and counterbalance can be reduced.

### Brief Description of Drawings

An embodiment of the present invention is now described by way of example and with reference to the accompanying drawings, of which;

Figure 1 shows components of a jigsaw gearbox embodying the present invention, having the counterbalance at top-dead-centre;

Figure 2 shows the gearbox of figure having the counterbalance at 90 degrees; and

Figure 3 shows the components of figure 1 and 2 in an exploded view.

### Mode(s) for Carrying Out the Invention

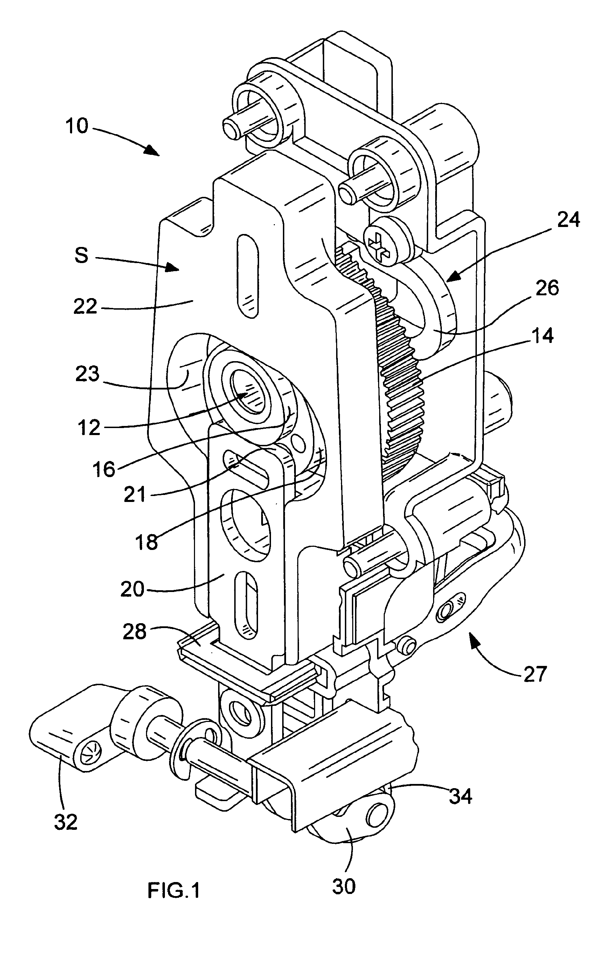

With reference to figure 1, a gearbox 10 for a jigsaw embodying the present invention is shown. At the rear of the gearbox, nearest to the motor (not shown) is a recess 12 in which a motor output shaft is receivable. The recess forms a component of the main gear 14 in the gearbox. The main gear 14 further comprises two cam surfaces, the first cam 16 of which is used to drive a timing fork 20. The first cam surface cooperates with a top surface 21 of the timing fork. The second cam 18 drives a counterbalance 22 through cooperation with an inner ovoid surface 23 formed as an aperture in the counterbalance. Both the first and second cams are disposed in the aperture. Thus, rotational movement of the gear 14 is translated into linear movement of the counterbalance and timing fork.

The gear 14 is coupled to a reciprocating shaft 24 via a standard scotch yoke mechanism 26. The reciprocating shaft extends through the gear casing where a blade clamp 27 is disposed to receive and hold a blade for use cutting a work-piece.

The timing fork 20 extends through a slot-shaped bearing 28 and engages a bell crank 30 at one end of the timing fork. A lever 32 is provided to engaging and disengaging orbital or pendulum action of the blade. The bell crank comprises a roller 34 which engages with the rear-side of a saw blade disposed in a blade clamp 27. Thus, linear motion of the timing fork is translated into an orbital motion of the blade during use, in conjunction with the reciprocating shaft mechanism.

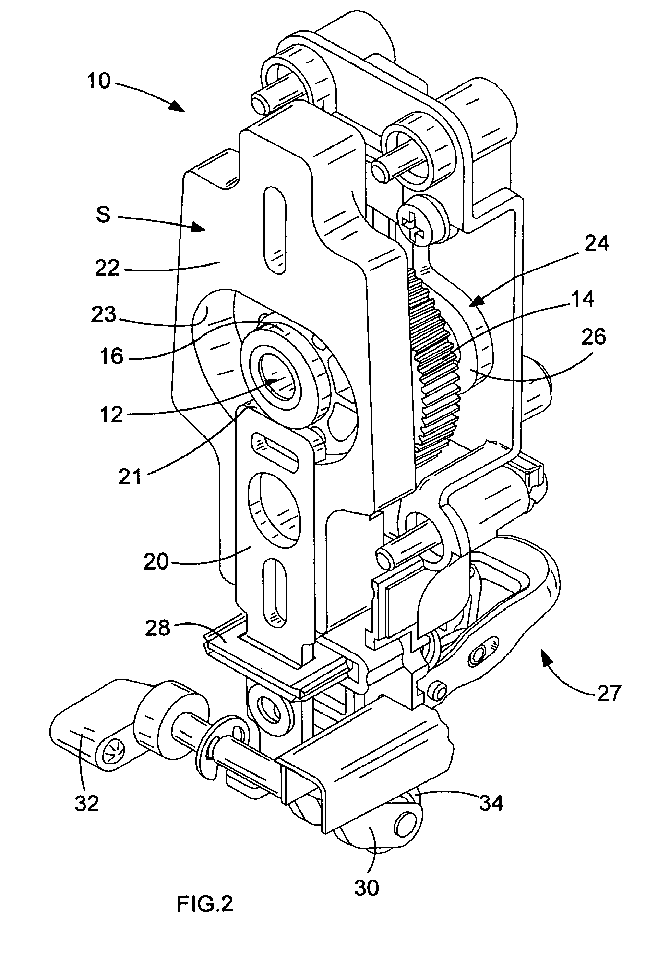

Referring to figure 2, the same gearbox is shown where the gear has rotated through 90 degrees.

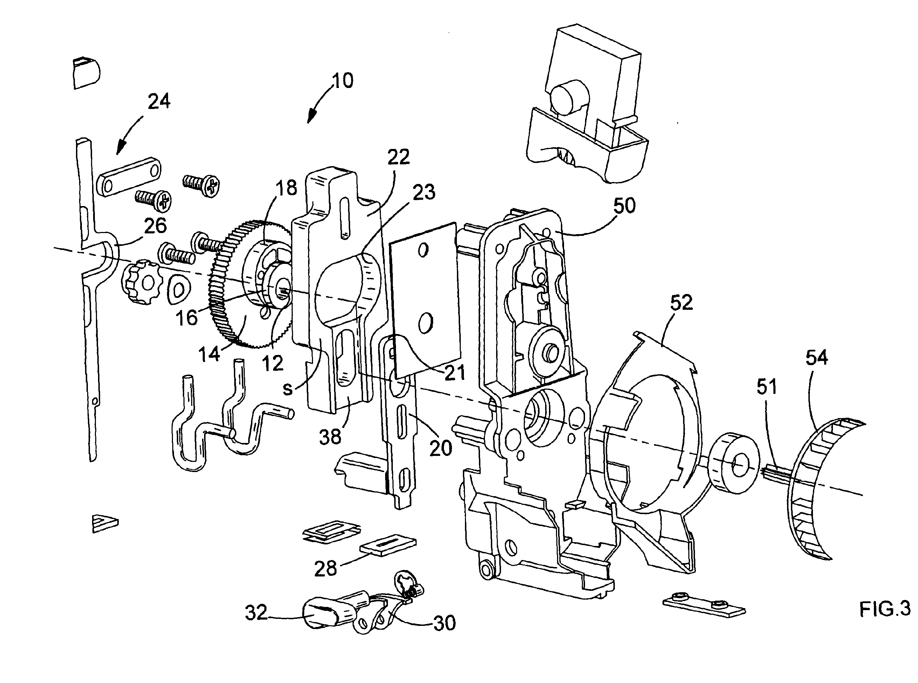

Referring now to figure 3, the gearbox components discussed above are shown in an exploded view. In addition to the components already shown in the preceding drawings, figure 3 also shows a gear chassis 50 on which various gearbox components can be mounted. The chassis comprises a hole through which an output shaft 51 from a motor can pass for driving the gearbox components. A shroud 52 is used to divert airflow generated from a motor fan 54. The airflow can be used to blow debris away from the cut area, for instance.

The counterbalance comprises a channel 38 into which the timing fork is disposed. The channel has the same width dimensions as the timing fork, thereby forming a guide surface to ensure proper motion and alignment of the timing fork during use. Thus, the counterbalance channel acts as a bearing surface thereby obviating the need for additional bearings for the timing fork. In particular, the side walls of the channel acts as bearings by cooperating with respective side surfaces of the timing fork. As a result, the overall number of component parts needed to make the gearbox is reduced and manufacturing of the gearbox is simplified.

The depth of the channel can be arranged to be equal to or greater than the depth dimension of the timing fork. Thus, the timing fork can fit into the channel such that it is flush with the outer surface S of the counterbalance. As a result, a more compact gearbox can be achieved.

The counterbalance is arranged to rotate out of phase with the reciprocating shaft to reduce operational vibrations felt by the user during use. The phase of the timing fork is arranged to achieve the most efficient cutting stroke of the blade during operation. Where a bell crank is used to transmit the movement of the timing fork to the blade, the timing fork operates 180 degrees out of phase with the reciprocating shaft. Thus, as the shaft is in the upwards (cutting) stroke, the bell crank needs to be pushing the blade forward into the work-piece. Conversely, when the reciprocating shaft is in the return, non-cutting stoke (downwards), the blade is not pushed into the work-piece by the crank. As a result, the timing fork operates in phase with the counterbalance.

## Claims

1. An electrically powered hand operated reciprocating saw, comprising a housing in which is disposed an electric motor having an output shaft (51), a gearbox (10) having an input coupled (12) to the motor's output shaft, the gearbox being arranged to convert rotary motion of the motor's output into a reciprocating motion of a reciprocation shaft (24) coupled to the gearbox output, the reciprocation shaft having a clamp (27) disposed at one end for clamping a cutting blade thereto; said gearbox further comprising, a counterbalance (22) and a timing fork (20), wherein, during use, an orbital motion of a blade disposed in the clamp is achievable by coupling movement of the timing fork to either the blade or reciprocation shaft; **characterised in that** the counterbalance comprises a guide for guiding the motion of the timing fork during use.

2. A tool according to claim 1, wherein the guide is a channel (38) having side walls, said channel being disposed on one surface (S) of the counterbalance.

3. A tool according to claim 3, wherein the timing fork comprises opposing edges, two of which are arranged to cooperate with a respective side wall of the channel.

4. A tool according to claim 2, wherein the channel is linear.

5. A tool according to claim 3 or 4, wherein the timing fork is disposed within the channel.

6. A tool according to claim 5, wherein the timing fork is arranged to be flush with the surface (S) of the counterbalance on which the channel is disposed and in which the timing fork is disposed.

7. A tool according to claim 1, wherein the counterbalance and timing fork move in phase with each other during use.
